(19) Europäisches Patentamt

European Patent Office

Office européen des brevets

(11) **EP 1 218 809 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(21) Anmeldenummer: **00951411.8**

(22) Anmeldetag: **20.07.2000**

(51) Int Cl.⁷: **G05D 1/03**, G05D 1/02

(86) Internationale Anmeldenummer:
**PCT/EP00/06951**

(87) Internationale Veröffentlichungsnummer:
**WO 01/013192 (22.02.2001 Gazette 2001/08)**

(54) **VERFAHREN UND VORRICHTUNG ZUR ERFASSUNG DER POSITION EINES FAHRZEUG IN EINEM VORGEGEBENEN BEREICH**

METHOD AND DEVICE FOR DETECTING THE POSITION OF A VEHICLE IN A GIVEN AREA

PROCEDE ET DISPOSITIF POUR DETECTER LA POSITION D'UN VEHICULE DANS UNE ZONE PREDETERMINEE

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **13.08.1999 DE 19938345**

(43) Veröffentlichungstag der Anmeldung:
**03.07.2002 Patentblatt 2002/27**

(73) Patentinhaber: **Locanis Technologies GmbH 85774 Unterföhring (DE)**

(72) Erfinder: **IRMER, Jochen D-80637 München (DE)**

(74) Vertreter: **Reinhard - Skuhra - Weise & Partner Postfach 44 01 51 80750 München (DE)**

(56) Entgegenhaltungen:
**EP-A- 0 185 816       US-A- 4 817 000**

EP 1 218 809 B1

**Beschreibung**

STAND DER TECHNIK

Die vorliegende Erfindung betrifft Verfahren und Vorrichtung zur Erfassung der Position von einem Fahrzeug in einem vorgegebenen Bereich, insbesondere einer Lagereinrichtung, sowie ein Lagerverwaltungsverfahren und -system.

Die DE 4429016 A1 offenbart eine Vorrichtung und ein Verfahren zur Navigation für fahrerlose Fahrzeuge. Dabei erfolgt ein Erfassen des Betrages und Winkels inkrementaler Bewegungen der Bewegung des Fahrzeuges mittels einer Koppelnavigationsvorrichtung. Weiterhin geschieht ein automatisches Festlegen einer jeweiligen Bezugsposition des Fahrzeugs an vorbestimmten Orten innerhalb eines vorgegebenen Bereichs mittels einer CCD-Kamera, jedes Mal dann, wenn das Fahrzeug einen entsprechenden Ort passiert. Weiterhin erfolgt ein Erfassen der aktuellen Position des Fahrzeuges in dem vorgegebenen Bereich durch eine vektorielle Summation der erfassten inkrementalen Bewegungsvektoren mittels einer Auswerteeinheit zum Ortsvektor der momentanen Bezugsposition. Die dort geschilderte Positions- und Lageerkennung wird nachteilhafterweise von einer sehr teuren CCD-Kamera und einem kontrastreichen Leuchtmittel in Form einer Deckenlampe abgeleitet. Ein Ausfall der Lampe führt zum Positionsverlust.

Die DE 3490712 C2 offenbart ein Fahrzeugsteuerungs- und -Leitsystem mit einer Bewegungsantriebseinrichtung zum Antreiben des Fahrzeuges, einer Lenkeinrichtung zum Steuern der Bahn des Fahrzeuges, einer Koppelnavigationseinrichtung zum Berechnen der Position des Kurses des Fahrzeuges auf inkrementeller Basis, einer Einrichtung zum Speichern einer gewünschten Bahn des Fahrzeuges, einer Einrichtung zum Steuern der Fahrzeugsantriebs- und- Lenkeinrichtung, um das Fahrzeug längs der gewünschten Bahn anzutreiben, und einer Einrichtung zum Speichern der Position einer oder mehrerer ortsfester Bezugsziele.

Die DE 3538908 A1 offenbart ein bordautonomes Ortungssystem für Positionsermittlung und Kollisionsschutz von Roboterund Flurförderfahrzeugen nach dem Koppelnavigationsverfahren auf vorgegebenen Fahrwägen. Mit mindestens einem systemeigenen Abstandssensor werden die momentane Fahrbahnbreite und- Länge laufend mit Hilfe einer Additionsschaltung ermittelt. Diese Sensorwerte werden derart verarbeitet, dass ein Steuersignal zur sicheren Führung des Fahrzeugs in der Fahrbahnmitte erhältlich ist.

Die DE 4039887 A1 offenbart ein weiteres bekanntes Fahrzeugleit- und Zielführungssystem.

Obwohl auf beliebige Fahrzeuge und Bereiche anwendbar, werden die vorliegende Erfindung sowie die ihr zugrundeliegende Problematik in bezug auf Gabelstapler in einer Lagereinrichtung als Bestandteile eines Lagerverwaltungssystems erläutert.

Ein Lagerverwaltungssystem überwacht, steuert, dokumentiert und analysiert die Warenbewegungen der Waren in einem Warenlager. Üblicherweise werden zum Durchführen der Warenbewegungen Transportfahrzeuge, wie z. B. Gabelstapler, eingesetzt.

Wichtige Faktoren, welche die Güte eines solchen Systems wiedergeben, sind Zugriffszeiten, Erfassungszeiten und Genauigkeit der Lagerplatzbestimmung.

Ein bekanntes System bedient sich beispielsweise fest vorgegebener Fahrwege für Transportwagen, z.B. auf Schienen, und darauf installierter Positionssensoren.

Als nachteilhaft bei dem obigen bekannten Ansatz hat sich die Tatsache herausgestellt, daß nur vorgegebene Wege befahrbar sind und die Installation bzw. Nachrüstung einen aufwendigen Eingriff in das System notwendig macht.

Zweckmäßiger wäre als ein System mit einer kontaktlosen Positionserfassung, wie z.B. das bekannte GPS-System (Global Positioning System). Die in Lagerbereichen auftretenden zu klassifizierenden Positionen liegen jedoch im Bereich von Zentimetern bzw. darunter (z.B. im Bereich von 40 cm bei Europaletten). Eine solch hohe Positionsauflösung erlaubt das bekannte differentielle GPS-System jedoch nicht, sondern hat typischerweise lediglich nur ca. 1 m Auflösungsvermögen. Weiterhin ist die Verwendung des GPS-Systems innerhalb geschlossener Räume aufgrund von Abschirmeffekten nicht möglich.

Daher ist es Aufgabe der vorliegenden Erfindung, ein Verfahren und Vorrichtung zur Erfassung der Position von einem Fahrzeug in einem vorgegebenen Bereich, insbesondere einer Lagereinrichtung, zu schaffen, welche eine genauere und zuverlässigere Positionsbestimmung ermöglichen und welche nur einen geringen Eingriff in den Bereich bzw. die Lagerräume erfordern. Eine weitere Aufgabe besteht in der Bereitstellung eines Lagerverwaltungsverfahrens und -systems.

VORTEILE DER ERFINDUNG

Das erfindungsgemäße Verfahren mit den Merkmalen des Anspruchs 1 und die entsprechende Vorrichtung gemäß Anspruch 6 weisen gegenüber dem bekannten Lösungsansatz den Vorteil auf, daß sie eine hochgenaue und zuverlässige Positionsbestimmung ermöglichen und nur einen geringen Eingriff in den vorhandenen Bereich bzw. die Lagerräume erfordern. Somit ist neben einer Erstausstattung problemlos eine Nachrüstung möglich.

Die der vorliegenden Erfindung zugrundeliegende Idee besteht darin, daß ein automatisches Festlegen einer jeweiligen Bezugsposition des jeweiligen Fahrzeuges an vorbestimmten Orten innerhalb des vorgegebenen Bereichs jedesmal dann erfolgt, wenn das Fahrzeug einen entsprechenden Ort passiert. Das automatische Festlegen einer jeweiligen Bezugsposition des Fahrzeuges wird an den vorbestimmten Orten mittels einer am Fahrzeug angebrachten zweiten Sensoreinrichtung durchgeführt, welche kontaktlos mit einer jeweiligen Bezugsmarkierung am entsprechenden Ort innerhalb des vorgegebenen Bereichs zusammenwirkt. Die jeweilige Bezugsmarkierung weist reflektierende und nicht reflektierende Bereiche auf, die das Fahrzeug gleichzeitig mittels zweier Signale abtastet, wobei die Koordinaten der Bezugsposition und optionellerweise der Durchfahrtswinkel durch Auswertung des Zeitverlaufs der reflektierten Intensität der Signale ermittelt werden.

In den Unteransprüchen finden sich vorteilhafte Weiterbildungen und Verbesserungen der jeweiligen Gegenstandes der Erfindung.

Gemäß einer bevorzugten Weiterbildung sind die Signalträger Lichtstrahlen, vorzugsweise Laserstrahlen, oder magnetische Induktionsfeldlinien.

Gemäß einer weiteren bevorzugten Weiterbildung weist die jeweilige Bezugsmarkierung einen rechteckigen Streifen auf, welcher zwei reflektierende Bereiche und einen nicht reflektierenden Bereich entlang der Rechteckdiagonalen aufweist, worunter das Fahrzeug durchfährt. Vorteilhafterweise ist bei dieser Bezugsmarkierung eine analytische Lösung bei der Ermittlung der Koordinaten der Bezugsposition und des Durchfahrtswinkels durch Auswertung des Zeitverlaufs der reflektierten Intensität der Signale möglich.

Gemäß einer weiteren bevorzugten Weiterbildung erfolgt das Erfassen des Betrages und des Winkels inkrementaler Bewegungsvektoren der Bewegung des Fahrzeuges mittels einer am Fahrzeug angebrachten ersten Sensoreinrichtung. Diese umfaßt vorzugsweise einen Gyrator zur Winkelbestimmung und einen Encoder zur Längenbestimmung.

Gemäß einer weiteren bevorzugten Weiterbildung wird das automatische Festlegen einer jeweiligen Bezugsposition des Fahrzeuges derart durchgeführt, daß die statistische Abweichung der erfaßten aktuellen Position von der tatsächlichen Position einen vorbestimmten Grenzwert nicht überschreitet.

ZEICHNUNGEN

Ausführungsbeispiele der Erfindung sind in den Zeichnungen dargestellt und in der nachfolgenden Beschreibung näher erläutert.

Es zeigen:

Fig. 1    eine schematische Darstellung einer Lagereinrichtung, in der eine Ausführungsform der erfindungsgemäßen Vorrichtung einsetzbar ist;

Fig. 2    eine Darstellung eines Meßstreifens und eines Fahrzeuges gemäß der Ausführungsform der erfindungsgemäßen Vorrichtung nach Fig. 1;

Fig. 3    eine Darstellung eines Meßstreifens zur Erläuterung des automatischen Festlegens einer jeweiligen Bezugsposition des Fahrzeuges;

Fig. 4    eine Darstellung von vom Meßstreifen reflektierten Lasersignalen als Funktion der Zeit für zwei unterschiedliche Durchfahrtswinkel; und

Fig. 5    eine Darstellung eines Meßstreifens zur Erläuterung der Ermittlung von x, y und $\alpha$.

BESCHREIBUNG DER AUSFÜHRUNGSBEISPIELE

In den Figuren bezeichnen gleiche Bezugszeichen gleiche oder funktionsgleiche Bestandteile.

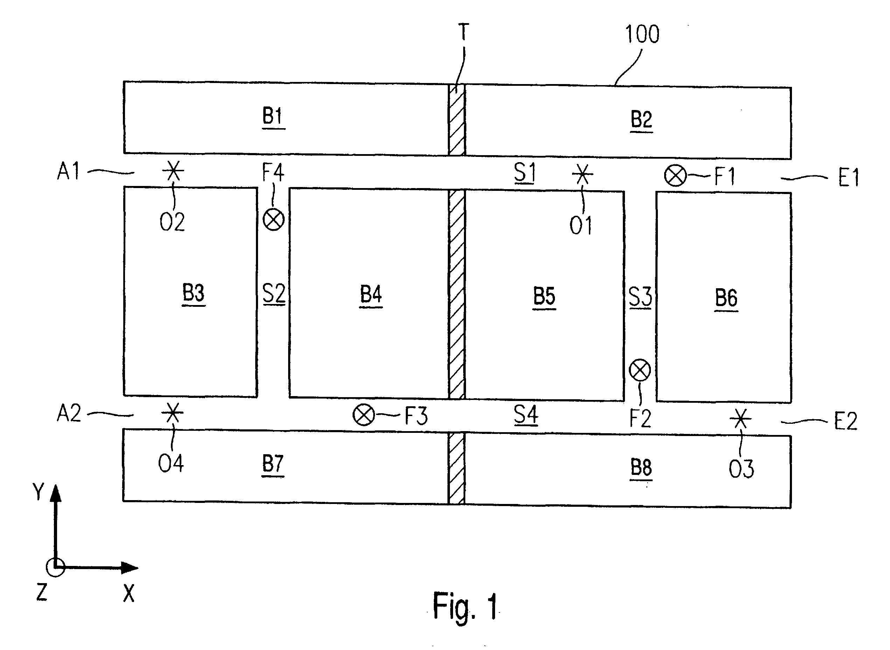

Fig. 1 ist eine schematische Darstellung einer Lagereinrichtung, in der eine Ausführungsform der erfindungsgemäßen Vorrichtung einsetzbar ist.

In Fig. 1 bezeichnen 100 einen vorgegebenen Bereich in Form einer Lagereinrichtung, B1-B8 Lagerteilbereiche, T eine Trennwand, E1 bzw. E2 Zuliefereingänge, A1 bzw. A2 Ablieferausgänge, S1-S4 Lagerstraßen, F1-F4 Fahrzeuge in Form von Staplern und O1-O4 Bezugsorte mit Meßstreifen.

Die Stapler F1-F4 sind mit nicht dargestellten funknetzfähigen Grafikterminals ausgestattet. Diese kommunizieren z.B. über eine serielle Schnittstelle mit einem ebenfalls nicht dargestellten Positionsgeber. Dieser stellt anhand von übermittelten Sensordaten die genaue Position des jeweiligen Staplers F1-F4 im Lager fest und übermittelt sie dem Staplerterminal. Neben diesen Positionsdaten zeigt das Terminal dem Staplerfahrer die für ihn bestimmten Beladeaufträge. Alle Staplerfahrer können aufgrund geeigneter Masken und Menüs nach der Anwesenheitsmeldung auch Handeingaben wie z.B. Leerguterfassung, Ladekorrekturen und Fehlerbehebungen durchführen.

Jeder Stapler F1-F4 weist eine Druck- und Dehnmeßstreifen-Sensorik (DMS-Sensorik) an den Staplergabeln auf, mittels derer festgestellt werden kann, ob der betreffende Stapler F1-F4 gerade Waren transportiert oder nicht sowie die jeweilige Stapelbelegung.

Alle Staplerterminals arbeiten entweder unmittelbar (online-Betrieb) oder zeitlich versetzt (offline-Betrieb) mit dem stationären Zentralrechner zusammen. Der online-Betrieb ist der Regelfall. Sind alle Staplerterminals offline betrieben worden, so muß zum Zurückkehren in den online-Betrieb eine Synchronisation der im offline-Betrieb vollzogenen Warenbewegungen zur Aktualisierung der Lagerbestände in der Datenbank des stationären Zentralrechners durchgeführt werden.

Typische Funktionen in solch einem Lagerverwaltungssystem sind beispielsweise:

Einlagern von aus der Produktion oder einem Lieferanten angelieferten Waren;

Auslagern von eingelagerten Waren;

Auffinden bestimmter eingelagerter Waren;

Umlagerung von eingelagerten Waren;

Erstellen einer Bestandsaufnahme aller eingelagerter Waren.

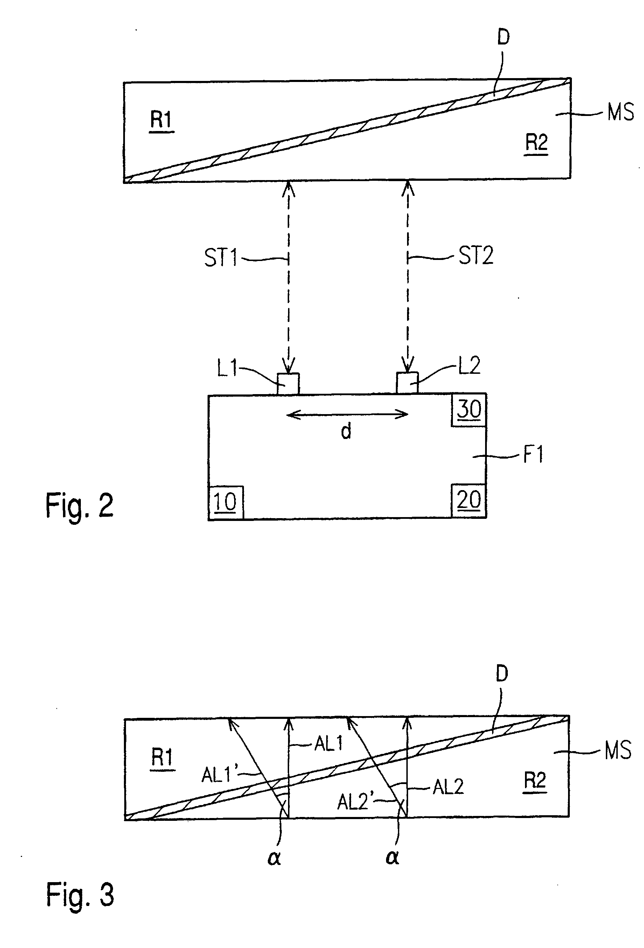

Fig. 2 ist eine Darstellung eines Meßstreifens und eines Fahrzeuges gemäß der Ausführungsform der erfindungsgen Vorrichtung nach Fig. 1.

In Fig. 2 bezeichnen MS Meßstreifen, welche an den Orten O1-O4 nach Fig. 1 an der Decke der Lagereinrichtung angebracht sind, D einen nicht-reflektierenden Diagonalbereich, R1 bzw. R2 reflektierende Teilbereiche, L1 bzw. L2 eine erste, zweite Lasereinrichtung, ST1 bzw. ST2 einen ersten, zweiten Laserstrahl, 10 eine erste Sensoreinrichtung, 20 einen Mikrocomputer und 30 eine Sende/Empfangseinheit.

Im folgenden wird am Beispiel des Staplers F1 näher erläutert, wie bei dieser Ausführungsform der Erfindung die Position des jeweiligen Staplers F1-F4 in der Lagereinrichtung 100 laufend ermittelt wird.

Die erste Sensoreinrichtung 10 in dem Stapler F1 enthält ein rotatorisches Sensorsystem auf Gyratorbasis und ein translatorisches Sensorsystem auf Encoderbasis.

Der Gyrator hat bei diesem Beispiel eine Auflösung von $1/10°$ und ist ein Piezokreisel, dessen Meßprinzip dem Focaultschen Pendel entspricht, also die Corioliskraft ausnutzt. Konkret wirkt diese Corioliskraft senkrecht auf einen linear vibrierenden Körper. Die Kraft ist proportional zur Winkelgeschwindigkeit, und der gewünschte Winkel läßt sich durch eine entsprechende Integration erhalten.

Der Encoder hat bei diesem Beispiel eine Auflösung im Zentimeterbereich, typischerweise 30-40 cm auf ca. 500 m. Er ist z.B. ein Induktivgeber, der die Radnabe abtastet. Er kann bei geeigneter Auswahl sowohl Vorwärts- als auch Rückwärtsbewegungen erfassen. Zweckmäßig ist eine Korrektur des sich ändernden Radumfangs.

Die so erreichbare Positioniergenauigkeit bei fehlendem Schlupf, konstantem Raddurchmesser und einer Auflösung von 48 Impulsen pro Umdrehung beträgt bei 100 m Geradeausfahrt +/- 4,8 cm, der Winkelversatz 17,4 cm.

Mit dieser Sensoreinrichtung 10 ist also ein stetiges Erfassen des Betrages und des Winkels inkrementaler Bewegungsvektoren der Bewegung des Fahrzeuges F1 möglich. So läßt sich prinzipiell nach einmaliger Festlegung eines Bezugsortes der momentane Aufenthaltsort des Staplers F1 als Vektor darstellen, der eine Vektorsumme der durch die Sensoreinrichtung 10 erfaßten inkrementalen Bewegungsvektoren ist. Doch tritt hierbei das Problem auf, daß die Genauigkeit des momentanen Aufenthaltsortes relativ zum Bezugsort mit steigender Anzahl von erfaßten inkrementalen Bewegungsvektoren abnimmt, da jeder erfaßte inkrementale Bewegungsvektor mit einem endlichen Erfassungsfehler behaftet ist.

Daher erfolgt bei dieser Ausführungsform der Erfindung jedesmal ein automatischen (Neu-)Festlegen einer jeweiligen Bezugsposition des Fahrzeuges F1 an den vorbestimmten Orten O1-O4 innerhalb der Lagereinrichtung 100 dann, wenn das Fahrzeug F1 einen entsprechenden Ort O1-O4 passiert. Die Orte O1 - 04 sind derart ausgewählt, daß die Wahrscheinlichkeit des Passierens durch ein jeweiliges Fahrzeug hoch ist.

Das Erfassen der aktuellen Position des Fahrzeuges F1 in dem vorgegebenen Bereich 100 erfolgt somit durch vektorielle Summation der erfaßten inkrementalen Bewegungsvektoren zum Ortsvektor der momentanen Bezugsposition, die ständig automatisch aufgefrischt wird. Somit kann man das Problem der abnehmenden Genauigkeit der Positionsbestimmung umgehen und stets hochgenaue Positionsdaten - typischerweise im Bereich von Zentimetern - erhalten.

Wie aus Fig. 3 ersichtlich, ist die jeweilige Bezugsmarkierung bzw. der Meßstreifen MS ein rechteckiger Streifen von typischerweise 10 cm Breite und 500 cm Länge, welcher zwei reflektierende Bereiche R1, R2 und einen nicht reflektierenden Bereich D entlang der Rechteckdiagonalen aufweist.

Der Meßstreifen MS ist an den Orten O1-O4 derart angebracht, daß das Fahrzeug F1 darunter durchfährt und gleichzeitig den Streifen mittels der zwei Laserstrahlen ST1, ST2, welche einen bekannten Abstand d voneinander aufweisen, abtastet. Dabei werden die Koordinaten der Bezugsposition durch Auswertung des Zeitverlaufs der vom jeweiligen Meßstreifen MS reflektierten Intensität der Laserstrahlen ST1, ST2 ermittelt.

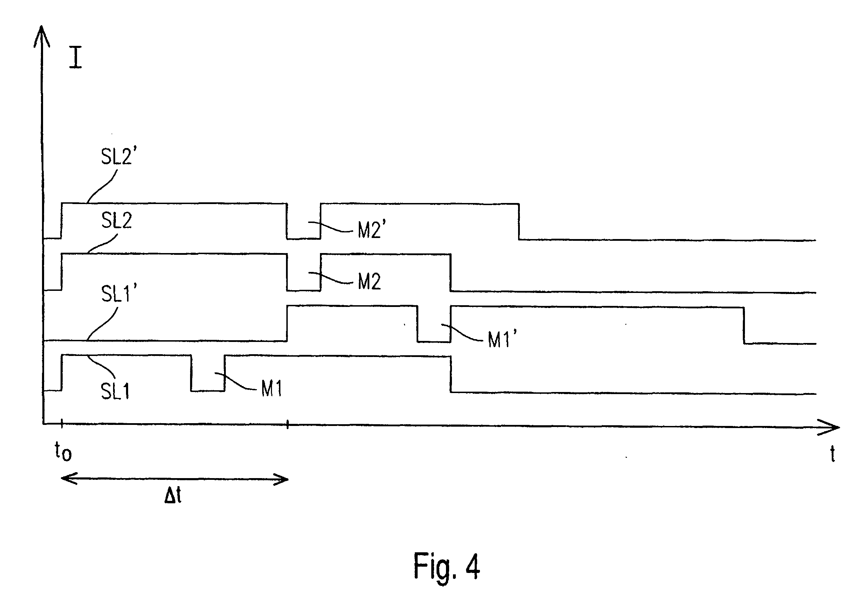

Fig. 3 ist eine Darstellung eines Meßstreifens zur Erläuterung des automatischen Festlegens einer jeweiligen Bezugsposition des Fahrzeuges, und Fig. 4 ist eine Darstellung von vom Meßstreifen reflektierten Lasersignalen als Funktion der Zeit für zwei unterschiedliche Durchfahrtswinkel.

In Fig. 3 und 4 bezeichnen AL1, AL2 und AL1', AL2' Abtastwege von den Laserstrahlen ST1 und ST2 auf dem Meßstreifen ST, $\gamma$ einen Winkel, t die Zeit, $\Delta t$ eine Zeitdifferenz, SL1, SL2 und SL1', SL2' Signalverläufe der reflektierten Intensität für die Laserstrahlen ST1 und ST2, M1, M2 und M1', M2' Minima der Signalverläufe der reflektierten Intensität für ST1 und ST2 und $t_0$ einen Bezugszeitpunkt.

Unter der Annahme, daß der Stapler F1 senkrecht zur Längsrichtung des Meßstreifens MS (also $\alpha = 0°$) unter dem Meßstreifen MS durchfährt, seien die Abtastwege von den Laserstrahlen ST1 und ST2 die mit AL1, AL2 bezeichneten Wege. Die entsprechenden Signalverläufe der reflektierten Intensität für die Laserstrahlen ST1 und ST2 sind SL1 und SL2 in Fig. 4. Wie ersichtlich, gibt es in diesem Fall keine Phasenverschiebung bzw. keine Zeitdifferenz $\Delta t$ zwischen SL1 und SL2.

Unter der Annahme, daß der Stapler F1 nicht senkrecht zur Längsrichtung des Meßstreifens MS (also $\alpha$ verschieden von 0°) unter dem Meßstreifen MS durchfährt, seien die Abtastwege von den Laserstrahlen ST1 und ST2 die mit AL1', AL2' bezeichneten Wege. Die entsprechenden Signalverläufe der reflektierten Intensität für die Laserstrahlen ST1 und ST2 sind SL1' und SL2' in Fig. 4. Wie ersichtlich, gibt es in diesem Fall eine Phasenverschiebung bzw. eine Zeitdifferenz $\Delta t$ zwischen SL1' und SL2'.

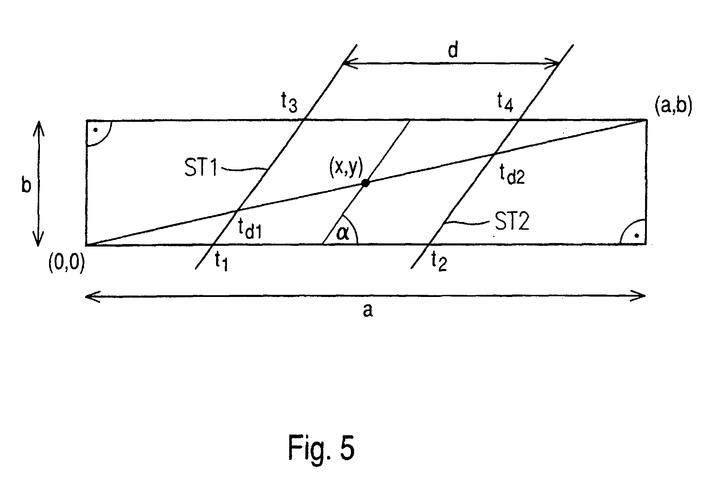

Fig. 5 ist eine Darstellung eines Meßstreifens zur Erläuterung der Ermittlung von x, y und $\alpha$. Es ergibt sich die x-Koordinate des Bezugsortes aus den gemessenen Zeiten $t_1, t_2, t_3, t_4, t_{d1}, t_{d2}$ in den Signalverläufen SL1 und SL2 sowie der Streifengeometrie a, b, d gemäß folgender Gleichung:

$$x = \frac{a(2t_1 + 2t_2 - t_{d1} - t_{d2}}{t_1 + t_2 - t_3 - t_4} \tag{1}$$

Die y-Koordinate ergibt sich aus:

$$y = \frac{b(-2t_1 + t_{d1} - t_{d2})}{2(-t_1 + t_3)} \tag{2}$$

Der Winkel $\alpha$ kann gewonnen werden aus:

$$\alpha = \arccos \frac{b(-t_1 + t_2 - t_3 + t_4)}{d(-t_1 - t_2 + t_3 + t_4)} \tag{3}$$

Im folgenden soll anhand eines einfachen Beispiels ein typischer Lagerverwaltungsvorgang beschrieben werden.

Die Stapler F1-F4 melden sich zunächst beim Zentralrechner über ihre Sende-/Empfangseinheit 30 an. Dann wird der Fahrer aufgefordert, einen ersten Meßstreifen anzufahren oder seine derzeitige Position als erste Bezugsposition direkt am Terminal einzugeben. Sodann erfolgt ein ständiges Berechnen der momentanen Position durch den Zentralrechner aufgrund der übertragenen Meßdaten der ersten Sensoreinrichtung 10 und eine Übertragung der berechneten momentanen Position an den jeweiligen Stapler F1-F4.

Jetzt sei angenommen, daß der Auftrag erfolgt, eine Ware am Zuliefereingang E1 abzuholen und an einer freien Lagerposition im Lagerteilbereich B7 am Ablieferausgang A2 zu lagern.

Der Stapler F1 wird dazu vom Zentralrechner bestimmt, da er sich am nächsten vom Zuliefereingang E1 befindet. Der Stapler F1 begibt sich also zum Zuliefereingang E1 und nimmt die Ware auf seine Gabeln, was durch den entsprechenden Dehnungssensor erfaßt wird. Gleichzeitig wird die Warenübernahme dem Zentralrechner über die Sende-/ Empfangseinheit gemeldet und dort registriert. Dann fährt der Stapler F1 die Lagerstraße S1 entlang in Richtung Ablieferausgang A1, wobei ständig seine Position in Bezug auf den ersten Bezugspunkt erfaßt wird. Beim Passieren des Ortes O1 treten die Laserstrahlen S1, S2 in Wechselwirkung mit dem dort befindlichen Meßstreifen MS, und ein neuer Bezugspunkt wird gemäß dem oben beschriebenen Verfahren vom Zentralrechner bestimmt. Ab diesem Zeitpunkt erfolgt die Positionserfassung in Bezug auf den neuen Bezugspunkt.

An der Kreuzung mit der Lagerstraße S2 biegt der Stapler F1 links ab und fährt bis zur Lagerstraße S4, biegt dort rechts ab und erreicht den Ort 04. Beim Passieren des Ortes 04 treten die Laserstrahlen S1, S2 in Wechselwirkung mit dem dort befindlichen Meßstreifen MS, und wieder wird ein neuer Bezugspunkt gemäß dem oben beschriebenen Verfahren vom Zentralrechner bestimmt. Ab diesem Zeitpunkt erfolgt die Positionserfassung in Bezug auf den neuen Bezugspunkt.

Schließlich erreicht der Stapler F1 den Einlagerort, der unmittelbar vor dem Ablieferausgang A2 liegt. Dort wird die Ware am vorgesehenen Ort eingelagert und dies dem Zentralrechner gemeldet. Letzterer speichert den Lagervorgang einschließlich der genauen Lagerortkoordinaten.

So läßt sich prinzipiell jeder Lagervorgang genau speichern und nachvollziehen.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Obwohl gemäß dem obigen Beispiel die Positionsberechnung im Zentralrechner anhand der übermittelten Sensordaten erfolgte, kann diese Berechnung auch im Mikrocomputer des Fahrzeuges erfolgen.

Auch ist die Erfindung nicht auf Lagerfahrzeuge beschränkt, sondern auf beliebige begrenzte Areale verallgemeinerbar.

Desweiteren kann die Festlegung der Bezugsorte nicht nur mittels dem beschriebenen Lasersystem geschehen, sondern mit beliebigen kontaktlosen Positionssensoren, welche die Bezugsmarkierung mit mindestens zwei Signalen abtasten, z.B. Induktivgebern, Lichtschranken usw. Im übrigen könnten dabei auch mehr als zwei Signale zum Abtasten verwendet werden.

Auch ist die Bezugsmarkierung nicht auf den gezeigten rechteckigen Streifen, welcher zwei reflektierende Bereiche und einen nicht reflektierenden Bereich entlang der Rechteckdiagonalen aufweist, worunter das Fahrzeug durchfährt, beschränkt. Vielmehr können mehrere solcher Streifen nebeneinander gesetzt werden, um einen Gesamtstreifen zu bilden, der aus einer Mehrzahl von Segmenten zusammengesetzt ist, welche jeweils zwei reflektierende Bereiche und einen nicht reflektierenden Bereich entlang der Rechteckdiagonalen aufweisen. Dies ist insbesondere dann günstig, wenn die Bezugsmarkierung eine bestimmte Breite überschreitet, denn in diesem Falle sinkt die Geradensteigung des nicht reflektierenden Bereich entlang der Rechteckdiagonalen und somit die Auflösungsgenauigkeit.

Beim obigen Beispiel der Bezugsmarkierung in Form des rechteckigen Streifen, welcher zwei reflektierende Bereiche und einen nicht reflektierenden Bereich entlang der Rechteckdiagonalen aufweist, ist vorteilhafterweise eine analytische Lösung bei der Ermittlung der Koordinaten der Bezugsposition und des Durchfahrtswinkels durch Auswertung des Zeitverlaufs der reflektierten Intensität der Signale möglich.

Jedoch sind selbstverständlich auch andere Streifengeometrien vorstellbar, wobei z.B. nur eine numerische Lösung bei der Ermittlung der Koordinaten der Bezugsposition und des Durchfahrtswinkels durch Auswertung des Zeitverlaufs der reflektierten Intensität der Signale möglich ist bzw. eine wesentlich komplexere analytische Lösung.

ISOCOM Automationssysteme, 81379 MÜNCHEN

Verfahren und Vorrichtung zur Erfassung der Position von einem Fahrzeug in einem vorgegebenen Bereich, insbesondere einer Lagereinrichtung, sowie Lagerverwaltungsverfahren und -system

BEZUGSZEICHENLISTE:

| 100 | vorgegebener Bereich, Lagereinrichtung |
|---|---|
| B1-B8 | Lagerteilbereiche |
| T | Trennwand |
| E1, E2 | Zuliefereingänge |
| A1, A2 | Ablieferausgänge |
| S1-S4 | Lagerstraßen |
| F1-F4 | Fahrzeuge |
| O1-O4 | Bezugsorte mit Meßstreifen |

(fortgesetzt)

| | |
|---|---|
| MS | Meßstreifen |
| D | nicht-reflektierender Diagonalbereich |
| R1, R2 | reflektierende Teilbereiche |
| L1, L2 | erste, zweite Lasereinrichtung |
| ST1, ST2 | erster, zweiter Laserstrahl |
| 10 | erste Sensoreinrichtung |
| 20 | Mikrocomputer |
| 30 | Sende/Empfangseinheit |
| $\gamma$ | Winkel |
| AL1, AL2; AL1', AL2' | Abtastwege von ST1 und ST2 |
| t | Zeit |
| $\Delta t$ | Zeitdifferenz |
| SL1, SL2; SL1', SL2' | Signalverläufe der reflektierten Intensität für ST1 und ST2 |
| M1, M2; M1', M2' | Minima der Signalverläufe der reflektierten Intensität für ST1 und ST2 entsprechend |
| $t_0$ | Bezugszeitpunkt |

**Patentansprüche**

1. Verfahren zur Erfassung der Position von einem Fahrzeug (F1-F4) in einem vorgegebenen Bereich (100), insbesondere einer Lagereinrichtung, mit den Schritten:

   Erfassen des Betrages und des Winkels inkrementaler Bewegungsvektoren der Bewegung des Fahrzeuges (F1-F4) durch eine erste Sensoreinrichtung (10);

   automatisches Festlegen einer jeweiligen Bezugsposition des Fahrzeuges (F1-F4) an vorbestimmten Orten (O1-O4) innerhalb des vorgegebenen Bereichs (100) jedesmal dann, wenn das Fahrzeug (F1-F4) einen entsprechenden Ort (O1-O4) passiert; und

   Erfassen der aktuellen Position des Fahrzeuges (F1-F4) in dem vorgegebenen Bereich (100) durch vektorielle Summation der erfaßten inkrementalen Bewegungsvektoren zum Ortsvektor der momentanen Bezugsposition;

   wobei
   das automatische Festlegen einer jeweiligen Bezugsposition des Fahrzeuges (F1-F4) an vorbestimmten Orten (O1-O4) mittels einer zweiten Sensoreinrichtung (L1, L2; MS) durchgeführt wird, welche kontaktlos mit einer jeweiligen Bezugsmarkierung (MS) am entsprechenden Ort (O1-O4) innerhalb des vorgegebenen Bereichs (100) zusammenwirkt; und
   die jeweilige Bezugsmarkierung (MS) reflektierende und nicht reflektierende Bereiche (R1, R2; D) aufweist, die die zweite Sensoreinrichtung (L1, L2, 30) gleichzeitig mittels mindestens zweier Signale (ST1, ST2) abtastet, wobei die Koordinaten (x, y) der Bezugsposition des Fahrzeugs relativ zu einer Bezugsposition der Bezugsmarkierung (MS) und optionellerweise der Durchfahrtswinkel ($\alpha$) durch Auswertung des Zeitverlaufs der reflektierten Intensität der Signale (ST1, ST2) ermittelt werden.

2. Verfahren nach Anspruch 1, **dadurch gekennzeichnet, daß** die Signalträger (ST1, ST2) Lichtstrahlen, vorzugsweise Laserstrahlen, oder magnetische Induktionsfeldlinien sind.

3. Verfahren nach Anspruch 1 oder 2, **dadurch gekennzeichnet, daß** die jeweilige Bezugsmarkierung (MS) einen rechtekkigen Streifen aufweist, welcher zwei reflektierende Bereiche (R1, R2) und einen nicht reflektierenden Bereich (D) entlang der Rechteckdiagonalen aufweist, worunter das Fahrzeug (F1-F4) durchfährt.

4. Verfahren nach Anspruch 1, 2 oder 3, **dadurch gekennzeichnet, daß** die erste und/oder zweite Sensoreinrichtung (10; L1, L2, 30) am Fahrzeug (F1-F4) angebracht ist.

5. Verfahren nach einem der Ansprüche 1 bis 4, **dadurch gekennzeichnet, daß** das automatische Festlegen einer jeweiligen Bezugsposition des Fahrzeuges (F1-F4) derart häufig durchgeführt wird, daß die statistische Abweichung der erfaßten aktuellen Position von der tatsächlichen Position einen vorbestimmten Grenzwert nicht überschreitet.

6. Vorrichtung zur Erfassung der Position von einem Fahrzeug in einem vorgegebenen Bereich, insbesondere einer Lagereinrichtung, mit:

einer ersten Sensoreinrichtung (10) zum Erfassen des Betrages und des Winkels inkrementaler Bewegungsvektoren der Bewegung des Fahrzeuges (F1-F4);

einer Festlegungseinrichtung (L1, L2; MS) zum automatischen Festlegen einer jeweiligen Bezugsposition des Fahrzeuges (F1-F4) an vorbestimmten Orten (O1-O4) innerhalb des vorgegebenen Bereichs (100) jedesmal dann, wenn das Fahrzeug (F1-F4) einen entsprechenden Ort (O1-O4) passiert; und

einer Erfassungseinrichtung (20) zum Erfassen der aktuellen Position des Fahrzeuges (F1-F4) in dem vorgegebenen Bereich (100) durch vektorielle Summation der erfaßten inkrementalen Bewegungsvektoren zum Ortsvektor der momentanen Bezugsposition;

wobei
die Festlegungseinrichtung (L1, L2; MS) eine zweite Sensoreinrichtung (L1, L2, 30) aufweist, welche kontaktlos mit einer Bezugsmarkierung (MS) am jeweiligen entsprechenden Ort (O1-O4) innerhalb des vorgegebenen Bereichs (100) zusammenwirkt;
die jeweilige Bezugsmarkierung (MS) reflektierende und nicht reflektierende Bereiche (R1, R2; D) aufweist; und
die zweite Sensoreinrichtung (L1, L2, 30) derart gestaltet ist, daß sie die jeweilige Bezugsmarkierung (MS) gleichzeitig mittels zweier Signale (ST1, ST2) abtasten kann, wobei die Koordinaten (x, y) der Bezugsposition des Fahrzeugs relativ zu einer Bezugsposition der Bezugsmarkierung (MS) und optionellerweise der Durchfahrtswinkel ($\alpha$) durch Auswertung des Zeitverlaufs der reflektierten Intensität der Signale (ST1, ST2) ermittelbar sind.

7. Vorrichtung nach Anspruch 6, **dadurch gekennzeichnet, daß** die Signalträger (ST1, ST2) Lichtstrahlen, vorzugsweise Laserstrahlen, oder magnetische Induktionsfeldlinien sind.

8. Vorrichtung nach Anspruch 6 oder 7, **dadurch gekennzeichnet, daß** die jeweilige Bezugsmarkierung (MS) einen rechteckigen Streifen aufweist, welcher zwei reflektierende Bereiche (R1, R2) und einen nicht reflektierenden Bereich (D) entlang der Rechteckdiagonalen aufweist, worunter das Fahrzeug (F1-F4) durchfährt.

9. Vorrichtung nach einem der Ansprüche 6 bis 8, **dadurch gekennzeichnet, daß** die erste und/oder zweite Sensoreinrichtung (10; L1, L2, 30) am Fahrzeug (F1-F4) angebracht ist.

10. Vorrichtung nach einem der Ansprüche 6 bis 9, **dadurch gekennzeichnet, daß** die Festlegungseinrichtung (L1, L2; MS) derart gestaltet ist, daß das automatische Festlegen einer jeweiligen Bezugsposition des Fahrzeuges (F1-F4) derart häufig durchgeführt wird, daß die statistische Abweichung der erfaßten aktuellen Position von der tatsächlichen Position einen vorbestimmten Grenzwert nicht überschreitet.

11. Lagerverwaltungsverfahren unter Verwendung des Verfahrens nach mindestens einen der Ansprüche 1 bis 5 mit den Schritten:

Vorsehen einer Lagereinrichtung und einer Mehrzahl von Lagerfahrzeugen zur Durchführung von Einlagerungs- und/oder Umlagerungs- und/oder Auslagerungsvorgängen von Waren; und

Speichern von zumindest einem der folgenden Parameter bei den Einlagerungs- und/oder Umlagerungs- und/oder Auslagerungsvorgängen: Lagerposition, Zeitpunkt der Einlagerung und/oder Umlagerung und/oder Auslagerung, Warenart, Lagerdauer.

12. Lagerverwaltungssystem unter Verwendung der Vorrichtung nach mindestens einen der Ansprüche 6 bis 10 mit:

Lagereinrichtung und einer Mehrzahl von Lagerfahrzeugen zur Durchführung von Einlagerungs- und/oder Umlagerungs- und/oder Auslagerungsvorgängen von Waren; und

einer Speichereinrichtung zum Speichern von zumindest einem der folgenden Parameter bei den Einlagerungs- und/oder Umlagerungs- und/oder Auslagerungsvorgängen: Lagerposition, Zeitpunkt der Einlagerung und/oder Umlagerung und/oder Auslagerung, Warenart, Lagerdauer.

**Claims**

1. Method of recording the position of a vehicle (F1-F4) within a specified area (100), especially inside a storage facility, with the steps;
   Recording the extent and the angle of incremental movement vectors of the vehicle's movements (F1-F4) by a first sensor device (10);
   Automatically fixing each reference position of the vehicle F1-F4) at pre-determined points (O1-O4) within that specified area (100) each time the vehicle (F1-F4) passes one of those relevant points (O1-O4);and
   Recording the vehicle's current position inside the specified area (100) by vectorial summarising of the recorded incremental movement vectors at the point vector of the reference position at that moment;
   by
   the automatic fixing of each reference position of the vehicle (F1-F4) at pre-determined points (O1-O4) is carried out by means of a second sensor device (L1, L2; MS), which works together with a reference marker (MS) at the relevant point (O1-O4) within the specified area (100) without making any contact; and
   each reference-marker (MS) features reflective and nonreflective areas (R1, R2; D) which scan the second sensor device (L1, L2, 30) simultaneously by means of at least two signals (ST1, ST2), whereupon the co-ordinates (*x, y*) of the vehicle's reference position in relation to a reference position of the reference-marker (MS) are obtained, optionally also the angle of the access-route ($\alpha$) by calculating the time-lapse of the reflected intensity of the signals (ST1, ST2).

2. Method according to claim 1, **characterised in that** the signal-carriers (ST1, ST2) are beams of light, preferably laser-beams, or magnetic induction-field lines.

3. Method according to claim 1 or 2, **characterised in that** each reference-marker (MS) features a rectangular strip, which in turn features two reflective areas (R1, R2) and one nonreflective area (D) along the diagonals of the rectangle, below which the vehicle (F1-F4) passes.

4. Method according to claim 1, 2 or 3, **characterised in that** the first and/or second sensor device (10; L1, L2, 30) is fitted to the vehicle (F1-F4).

5. Method according to one of claims 1 to 4, **characterised in that** the automatic fixing of each reference position for the vehicle (F1-F4) is performed sufficiently frequently that the statistical deviation from the recorded current position as compared with the current actual position will not exceed a pre-set limit.

6. A device to record the position of a vehicle within a specified area, especially a storage facility, with:

a first sensory device (10) to record the extent and the angle of incremental movement vectors of the vehicle's movements (F1-F4);

a fixer unit (L1, L2; MS) to determine each reference position for the vehicle (F1-F4) automatically at pre-determined points (O1-O4) within the specified area (100) each time the vehicle (F1-F4) passes one of those relevant points (O1-O4); and

a recording device (20) to record the vehicle's (F1-F4) current position within the specified area (100) by vectorial summarising of the recorded incremental movement vectors against the reference position's point vector at that moment;

where

the fixing installation (L1, L2; MS) features a second sensor device (L1, L2, 30), which works together contactlessly with a reference-marker (MS) at each corresponding point (O1-O4) within the specified area (100), without making any physical contact;

each reference-marker (MS) features reflective and nonreflective areas (R1, R2; D); and

the second sensor device (L1, L2, 30) is devised in such a way that it can scan each reference-marker (MS) simultaneously by means of two signals (ST1, ST2), whereupon the co-ordinates ($x$, $y$) of the reference position of the vehicle in relation to a reference-position of the reference marker (MS) can be obtained; also, optionally, the angle of the access-path ($\alpha$) can be ascertained by calculating the time-lapse of the reflected intensity of the signals (ST1, ST2).

7.  Device according to claim 6, **characterised in that** the: signal-carriers (ST1, ST2) are beams of light, preferably laser-beams, or magnetic induction-field lines.

8.  Device according to claim 6 or 7, **characterised in that** the reference-marker (MS) features a rectangular strip, which in turn features two reflective areas (R1, R2) and one nonreflective area (D) along the diagonals of the rectangle, below which the vehicle (F1-F4) passes.

9.  Device according to one of claims 6 to 8, **characterised in that** the first and/or second sensor devices (10; L1, L2, 30) are fitted to the vehicle (F1-F4).

10. Device according to one of claims 6 to 9, **characterised in that** the fixer unit (L1, L2; MS) is devised in such a way that the automatic fixing of a reference position of the vehicle (F1-F4) is performed sufficiently frequently that the statistical deviation of recorded current position from the actual current position will not exceed a pre-set limit.

11. Store-management method, making use of the methods according to at least one of claims 1 to 5, with the steps:

    provision of a storage facility and a fleet of warehouse vehicles to perform depositing and/or transferring and/or removal operations on items of merchandise; and

    saving at least one of the following parameters in the course of depositing and/or transferring and/or removal operations: the position in the store, the time of depositing and/or transferring and/or removal; type of merchandise; duration of storage.

12. Store-management system, making use of the device according to at least one of claims 6 to 10, with:

    warehousing/storage facilities and a fleet of warehouse vehicles to perform depositing and/or transferring and/or removal operations on merchandise; and

    a data-storage facility to save at least one of the following parameters when carrying out depositing and/or transferring and/or removal operations: position within the store, time of depositing and/or transferring and/or removal; type of merchandise; duration of storage.

**Revendications**

1.  Procédé pour détecter la position d'un véhicule (F1-F4) dans une zone prédéterminée (100), particulièrement dans un dispositif d'entreposage, comprenant les étapes consistant à :

    détecter le module et l'angle des vecteurs de mouvements incrémentiels du mouvement du véhicule (F1-F4) par un premier capteur (10) ;

    déterminer automatiquement une position de référence respective du véhicule (F1-F4) à un lieu déterminé (O1-O4) à l'intérieur de la zone prédéterminée (100) chaque fois que le véhicule (F1-F4) passe un lieu correspondant ; et

    détecter la position instantanée du véhicule (F1-F4) dans la zone prédéterminée (100) par l'addition vectorielle des vecteurs de mouvements incrémentiels détectés pour le vecteur de lieu de la position de référence temporaire ;

    dans lequel

    la détermination automatique d'une position de référence respective du véhicule (F1-F4) dans un lieu déterminé (O1-O4) est exécutée au moyen d'un deuxième capteur (L1, L2 ; MS), lequel agit conjointement sans contact avec un repère de référence respectif (MS) au lieu correspondant (O1-O4) à l'intérieur de la zone prédéterminée (100) ; et

le repère de référence respectif (MS) présente des zones réfléchissantes et non réfléchissantes (R1, R2 ; D), que le deuxième capteur (L1, L2, 30) balaie en même temps au moyen d'au moins deux signaux (ST1, ST2), moyennant quoi les coordonnées (x, y) de la position de référence du véhicule sont déterminées par rapport à une position de référence du repère de référence (MS) et, facultativement, de l'angle de passage (α), par l'analyse du cours du temps de l'intensité réfléchie des signaux (ST1, ST2).

**2.** Procédé selon la revendication 1, **caractérisé en ce que** les porteurs de signaux (ST1, ST2) sont des rayons lumineux, de préférence des rayons laser ou des lignes de champs inducteurs magnétiques.

**3.** Procédé selon la revendication 1 ou 2, **caractérisé en ce que** le repère de référence respectif (MS) présente une bande rectangulaire, laquelle présente deux zones réfléchissantes (R1, R2) et une zone non réfléchissante (D) le long des diagonales du rectangle, en dessous desquelles passe le véhicule (F1-F4).

**4.** Procédé selon la revendication 1 ou 2 ou 3, **caractérisé en ce que** le premier et/ou le deuxième capteur (10; L1, L2, 30) est placé au niveau du véhicule (F1-F4).

**5.** Procédé selon l'une quelconque des revendications 1 à 4, **caractérisé en ce que** la détermination automatique d'une position de référence respective du véhicule (F1-F4) est exécutée avec une fréquence telle que l'écart statistique de la position instantanée détectée par rapport à la position réelle ne dépasse pas une valeur limite prédéterminée.

**6.** Dispositif de détection de la position d'un véhicule dans une zone prédéterminée, particulièrement dans un dispositif d'entreposage, comprenant :

un premier capteur (10) pour détecter le module et l'angle des vecteurs de mouvements incrémentiels du mouvement du véhicule (F1-F4) ;
un dispositif de détermination (L1, L2 ; MS) pour déterminer automatiquement une position de référence respective du véhicule (F1-F4) à des lieux prédéterminés (O1-O4) à l'intérieur de la zone prédéterminée (100) chaque fois que le véhicule (F1-F4) passe dans un lieu correspondant (O1-O4) ; et
un dispositif de détection (20) pour détecter la position instantanée du véhicule (F1-F4) dans la zone prédéterminée (100) par l'addition vectorielle des vecteurs de mouvements incrémentiels détectés pour le vecteur de lieu de la position de référence temporaire ;

dans lequel
le dispositif de détermination (L1, L2 ; MS) présente un deuxième capteur (L1, L2, 30), lequel agit conjointement sans contact avec un repère de référence (MS) au niveau du lieu correspondant respectif (O1-O4) à l'intérieur de la zone prédéterminée ;
le repère de référence respectif (MS) présente des zones réfléchissantes et non réfléchissantes (R1, R2 ; D) ; et
le deuxième capteur (L1, L2, 30) est disposé de sorte qu'il puisse balayer le repère de référence respectif (MS) en même temps au moyen de deux signaux (ST1, ST2), moyennant quoi les coordonnées (x, y) de la position de référence du véhicule peuvent être déterminées par rapport à une position de référence du repère de référence (MS) et, facultativement, de l'angle de passage (α) par l'analyse du cours du temps de l'intensité réfléchie du signal (ST1, ST2).

**7.** Dispositif selon la revendication 6, **caractérisé en ce que** les porteurs de signaux (ST1, ST2) sont des rayons lumineux, de préférence des rayons laser ou des lignes de champs inducteurs magnétiques.

**8.** Dispositif selon la revendication 6 ou 7, **caractérisé en ce que** le repère de référence respectif (MS) présente une bande rectangulaire, laquelle présente deux zones réfléchissantes (R1, R2) et une zone non réfléchissante (D) le long des diagonales des rectangles, en dessous desquelles le véhicule (F1-F4) passe.

**9.** Dispositif selon l'une quelconque des revendications 6 à 8, **caractérisé en ce que** le premier et/ou le deuxième capteur (10 ; L1, L2, 30) est placé au niveau du véhicule.

**10.** Dispositif selon l'une quelconque des revendications 6 à 9, **caractérisé en ce que** le dispositif de détermination (L1, L2 ; MS) est formé de sorte que la détermination automatique d'une position de référence respective du véhicule (F1-F4) est exécutée avec une fréquence telle que l'écart statistique de la position instantanée détectée par rapport à la position réelle ne dépasse pas une valeur limite prédéterminée.

**11.** Procédé de gestion d'entrepôt sous (utilisation du procédé selon au moins l'une quelconque des revendications 1 à 5, comprenant les étapes consistant à :

    prévoir un dispositif d'entreposage et une pluralité de véhicules d'entreposage pour exécuter les opérations de chargement et/ou de transfert et/ou de déchargement de marchandises ; et
    enregistrer au moins un des paramètres suivants lors des opérations de chargement et/ou de transfert et/ou de déchargement : position d'entreposage, moment de chargement et/ou de transfert et/ou de déchargement, type de marchandises, durée d'entreposage.

**12.** Système de gestion d'entrepôt sous l'utilisation du dispositif selon au moins l'une quelconque des revendications 6 à 10 comprenant :

    un dispositif d'entreposage et une pluralité de véhicules d'entreposage pour exécuter les opérations de chargement et/ou de transfert et/ou de déchargement de marchandises ; et
    un dispositif d'enregistrement pour enregistrer au moins un des paramètres suivants lors des opérations de chargement et/ou de transfert et/ou de déchargement : position d'entreposage, moment du chargement et/ou du transfert et/ou du déchargement, type de marchandises, durée d'entreposage.

Fig. 1

EP 1 218 809 B1

Fig. 2

Fig. 3

Fig. 4

Fig. 5